# EUROPEAN PATENT SPECIFICATION

(11) **EP 1 436 516 B1**
(45) Date of publication and mention of the grant of the patent: **11.01.2006**
(21) Application number: 02763831.1
(22) Date of filing: 02.10.2002
(51) Int. Cl.: F16D 1/072, F16B 17/00, F16B 39/02

(54) **CONNECTING AND LOCKING STEMS FOR VALVES**
VERBINDEN UND SICHERN VON SCHÄFTEN VON VENTILEN
TIGES DE VERROUILLAGE ET DE CONNEXION POUR SOUPAPES

(30) Priority: 18.10.2001 US 42064
(43) Date of publication of application: 14.07.2004
(73) Proprietor: FISHER CONTROLS INTERNATIONAL LLC, Clayton, MO 63136 (US)
(72) Inventor: BAUMANN, Hans, D., Rye, NH 03870 (US)
(74) Representative: Bohnenberger, Johannes
(86) International application number: PCT/US2002/031440
(87) International publication number: WO 2003/033928

(56) References cited:
- DE-A- 3 248 197
- DE-A- 3 425 079
- DE-A- 10 029 100
- US-A- 1 780 675
- US-A- 4 916 801

## Description

### FIELD OF THE INVENTION

The present invention relates to connecting and locking stems, and other similar structures, to various components, and more particularly to a method and apparatus for connecting and locking stems utilizing a coining device.

### BACKGROUND OF THE INVENTION

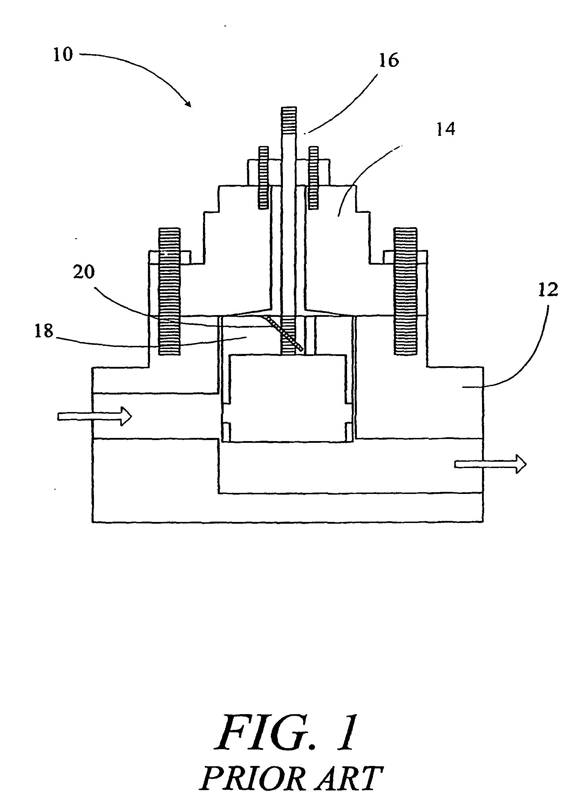

In general, components such as valve stems are mounted together with other components. One known approach to mounting a valve stem to a plug within a valve is illustrated in **FIG. 1.** A valve 10 is provided having a valve body 12 mounted to a valve bonnet 14 utilizing threaded fittings. A valve stem 16 couples with a valve plug 18 in a manner utilizing two separate mechanisms working in conjunction with each other. First, the valve stem 16 is threaded and screws into a threaded passage of the valve plug 18. Once the valve stem 16 is completely screwed into the valve plug 18, a hole is drilled at an angle into the top of the valve plug and through a core of the valve stem 16. The hole is then filled with a pin 20 that slides, or screws, into the hole. The pin 20 passes through the walls of the valve plug 18 and through the core of the valve stem. Thus, the pin 20 holds the valve stem 16 in place and prevents it from unscrewing.

However, this fastening arrangement is less than ideal since an unwanted amount of movement of the pin, the valve stem 16, and the valve plug 18 exists. For example, if the valve stem 16 is not completely screwed into the valve plug 18 prior to the pin 20 being inserted, the pin 20 may be insufficient to hold the valve stem 16 completely motionless relative to the valve plug 18. This is because there is an absence of the added friction of the valve stem 16 thread having reached the end of the passage within the valve plug 18. Alternatively, if the hole that is drilled for the pin 20 maintains any portion that is slightly larger than the pin 20, the pin may move within the hole, resulting in a diminished ability to hold the valve stem 16 motionless relative to the valve plug 18.

In general, it is desirable to avoid any form of play between components including the valve stem 16 and the valve plug 18. Over time, there is a likelihood of one or more of the components loosening and causing slight movement between each of the components. The movement of the valve plug 18 relative to the valve stem 16 can substantially affect the efficiency of the valve 10. For example, if the valve plug 18 is able to move relative to the valve stem 16, the valve plug 18 may experience increased friction as it moves within the walls of the valve body 12. In addition, if the valve plug 18 is able to move out of position relative to the valve stem 16, this movement may affect the sealing capability of the valve plug 18, and thus the ability of the valve 10 to completely block flow, or regulate flow predictably.

In general, fluid vibration or resonance of the plug can cause the unscrewing of the valve stein 16 relative to the valve plug 18. Such vibrations are caused in part, for example, by cavitation, high pressure drop, or aero-dynamic noise. If a valve plug 18 completely unscrews from the valve stem 16, the results can be failure of the valve.

In addition, these known methods are relatively time consuming, leading to increased manufacturing costs and decreased throughput because of the multiple steps and tools required to form the permanent couplings.

### SUMMARY OF THE INVENTION

There is a need in the art for a permanent, reliable, and efficient method for mounting components such as stems to other components such as plugs. The present invention is directed toward further solutions to address this need.

In accordance with the present invention, a method of connecting and locking a stem to a valve plug includes the step of disposing the stem in a passage formed in the valve plug. The method also includes the step of deforming an end portion of the stem into a wall of the valve plug to permanently non-rotationally lock the stem within the passage of the valve plug.

In accordance with one aspect of the present invention, the passage has an internal thread suitable for threadingly receiving the stem.

In accordance with another aspect of the present invention, the deforming step includes the step of pressing a coining device into a second end of the passage to engage with an end portion of the stem to configure the stem for permanent non-rotational mounting within the valve plug.

The coining device, in accordance with further aspects of the present invention, can include a shank having a tip disposed at one end of the shank. According to one practice, the shank can have a diameter greater than a diameter of the passage of the component. The tip of the shank can take many forms including having at least one land with a taper. The land can be uniform or non-uniform in shape.

The method may further include the step of removably mounting the coining device into a press machine.

In accordance with still further aspects of the present invention, the method can include the step of deforming the end portion of the stem to form at least one radial feature extending from an axis of the stem. In addition, the method can further include the step of extending the at least one radial feature into a wall of the passage to substantially hinder rotation of the stem relative to the component.

In accordance with the present invention, the stem is in the configuration of a valve stem and the component is in the configuration of a valve plug.

In accordance with the present invention, a valve is provided having a valve body. A stem mounts within the valve body, and a valve plug is provided having a passage sized for receiving a portion of the stem. At least one radial feature protrudes from an end of the stem into a wall of the passage.

In accordance with further aspects of the present invention, the radial feature can non-rotationally mount the stem with the component. The stem can be at least partially threaded. The passage can be at least partially threaded, such that the stem is screwed into the passage. Three radial features can protrude from the end of the stem into the wall of the passage to substantially hinder rotation of the stem relative to the valve plug.

In accordance with still another aspect of the method of the present invention, a coining device for coupling stems with components is provided. The coin includes a shank having a tip disposed at one end. The shank and the tip are sized and dimensioned to fit within a passage of the component in a manner that deforms the walls of the passage.

In accordance with further aspects of the method of the present invention, the coin device can further include at least one land disposed on the tip of the shank. The land can be substantially rectilinear in shape, or it can be non-uniform in shape. The land can be tapered. The land may also be at least partially curved in shape. There can be three lands disposed on the tip of the shank. The shank can be constructed of a hardened material.

### BRIEF DESCRIPTION OF THE DRAWINGS

The aforementioned features and advantages, and other features and aspects of the present invention, will become better understood with regard to the following description and accompanying drawings, wherein:
**FIG. 1** is a diagrammatic illustration of a known valve configuration;
**FIG. 2A** is a diagrammatic side view illustration of a coining device in accordance with aspects of the present invention;
**FIG. 2B** is a top view of the coining device of **FIG. 2A;**
**FIG. 3** is a schematic flow chart diagram illustrating the steps employed to permanently connect a stem to a component according to the teachings of the present invention;
**FIG. 4A** is a diagrammatic side view illustration of a valve configuration where the valve stem is permanently secured to a valve plug according to aspects of the present invention;
**FIG. 4B** is an enlarged diagrammatic illustration of the valve plug and the valve stem of **FIG. 4A;**
**FIGS. 5A, 5B**, and **5C** are diagrammatic illustrations of the formation of the features 40 with the coining device according to aspects of the present invention;
**FIGS. 6A and 6B** are diagrammatic illustrations of the formation of the features 40 in a different arrangement of the valve stem and the valve plug according to the teachings of present invention; and
**FIGS. 7A** through **7D** are diagrammatic illustrations of different coining device embodiments according to the teachings of the present invention.

### DESCRIPTION OF THE ILLUSTRATED EMBODIMENTS

Illustrative embodiments of the present invention relate to a method and apparatus for connecting and locking a stem within a component. The stem can be a valve stem that is threaded in a top portion of a valve plug. The stem can be attached to the valve plug by completely screwing the stem into the valve plug. The stem is tightened to frictionally hold the valve stem in place. The valve plug with the stem attached is placed in a press, and a coining device having a tapered end is positioned adjacent and aligned with a recessed portion of the valve stem. A load is placed on the coining device forcing a land portion formed on the tapered end into the valve stem. The land displaces a portion of the wall of the valve stem between the recessed portion and the threaded exterior, into the wall of the valve plug, thereby forming a permanent connection between the valve stem and the valve plug. This connection is only breakable if a torque is applied to the stem that exceeds the rotational stress level of the stem material. In other words, a level of rotational force may be applied such that the stem would rather deform in a rotational manner than disengage the valve plug.

For purposes of clarity and illustration, the stem as shown herein is in the form of a valve stem, and the component as shown herein is in the form of a valve plug. However, one of ordinary skill in the art will appreciate that the teachings of the present invention are applicable to a variety of stem-type components requiring connection and locking with other components.

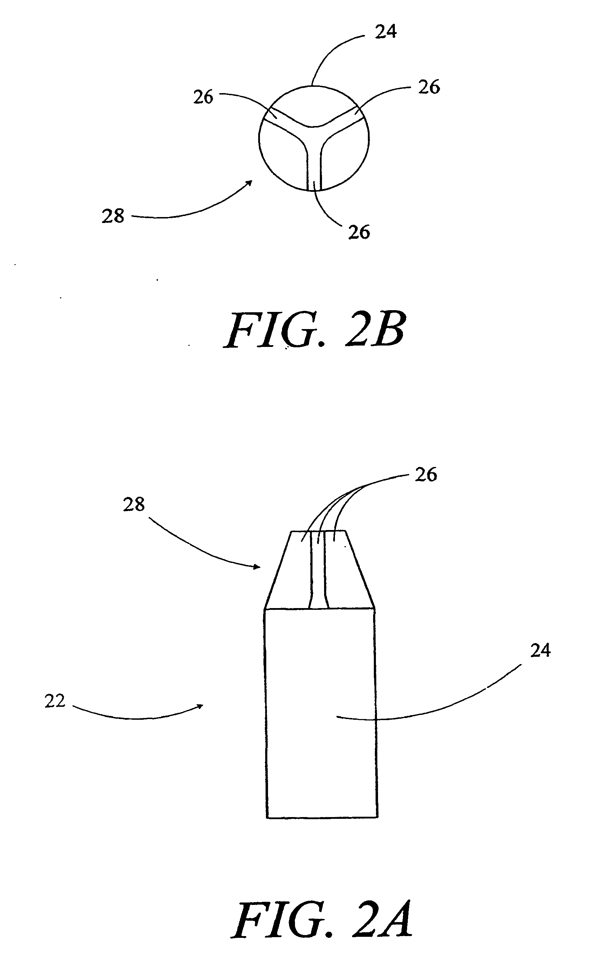

**FIGS. 2** through **7D**, wherein like parts are designated with like reference numerals throughout, illustrate example embodiments of a method and apparatus for connecting and locking stems, or stem-type components, to other components according to the present invention. Although the present invention will be described with reference to the example embodiments illustrated in the figures, it should be understood that many alternative forms can embody the present invention. One of ordinary skill in the art will additionally appreciate different ways to alter the parameters of the embodiments disclosed, such as the size, shape, or type of elements or materials, in a manner still in keeping with the scope of the present invention as defined by the appended claims.

**FIG. 2A** illustrates a coining device 22. The coining device 22 includes a shank 24 as the main body of the coining device 22. A tapered tip 28 is disposed at one end of the shank 24. The tapered tip 28 can include one or more lands 26. The shape of the shank 24 can vary depending on a particular application of the coining device 22. For example, there can be a taper extending the entire length of the shank 24; the shank 24 can contain one or more apertures or openings; or, the shank can have different cross-sectional shapes such circular, elliptical, rectilinear, irregular, and the like.

**FIG. 2B** illustrates a top view of the coining device 22. The illustrated embodiment includes three lands 26 arranged with approximately 120° of spacing between each land 26. Those of ordinary skill in the art will recognize that any number of lands 26 can be formed on the tip 28. The lands 26 can be equally separated from each other, or can be arranged in any suitable pattern. Specifically, the number, shape, and arrangement of the lands 26 can vary as understood by one of ordinary skill in the art. Some example configurations will be discussed herein.

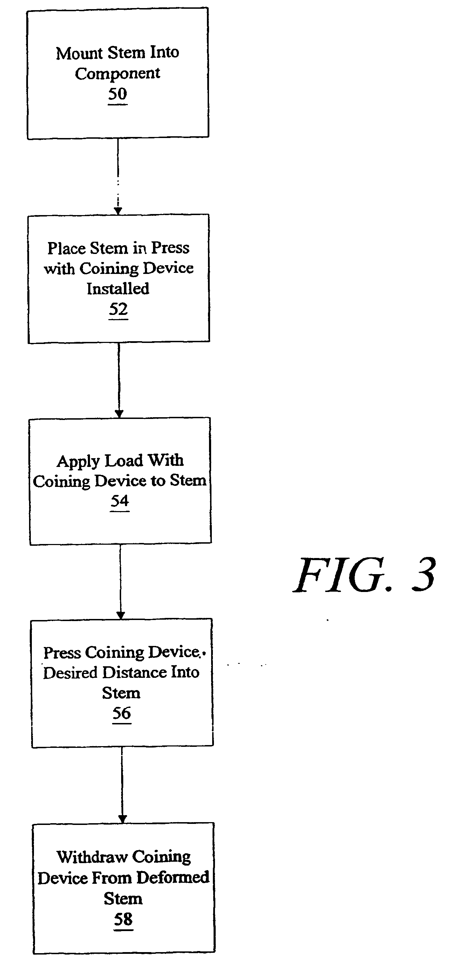

In accordance with one embodiment of the present invention, the method for connecting and locking a valve stem 36 with a valve body 38 can be described as follows and illustrated in **FIG. 3.** The valve stem 36 is first mounted within a component, e.g., the valve plug 38, a plunger, or a reciprocating pump (step 50). Again, for purposes of illustration, the example of the valve stem 36 mounting with the valve plug 38 will be described herein, although the teachings of the illustrated method are applicable to the connection and locking of other components as well. The method of initial mounting of the valve stem 36 to the valve plug 38 can be carried out in a number of different ways. For example, the valve stem 36 can be threaded or screwed into a threaded passage of the valve plug 38. Alternatively, the valve stem 36 can slide into a passage of the valve plug 38 and can be held in place with an external fastener, such as a nut. The particular mounting technique can result in a permanent mount, a semi-permanent mount, or a removable mount. Other mounting techniques are known to one of ordinary skill in the art and need not be discussed further herein.

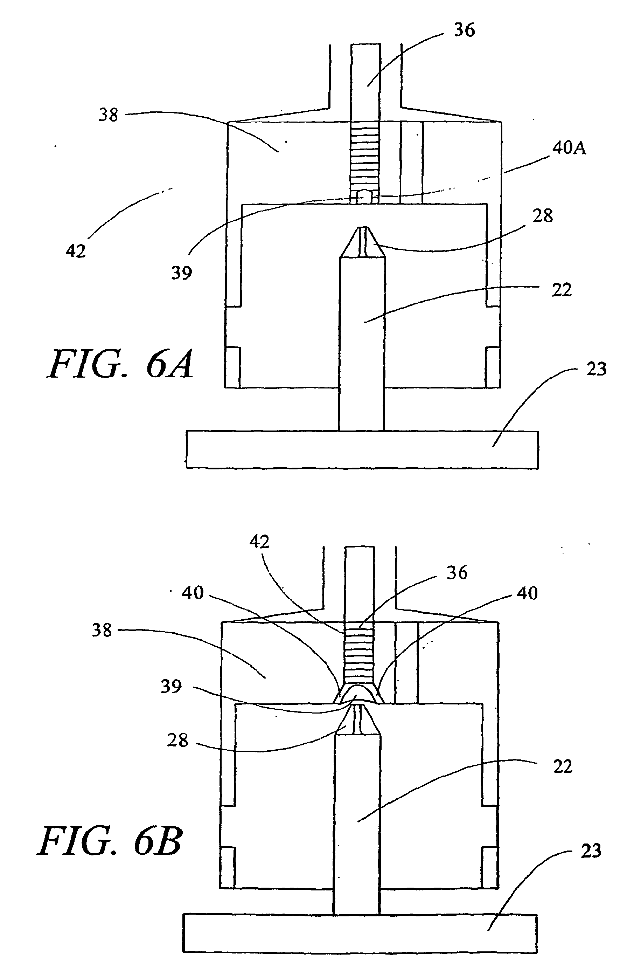

The valve stem 36 is placed into a press 23 (*see* **FIGS. 6A** and **6B**) along with the coining device 22 (step 52). The press 23 is a standard piece of machinery that can be moved in a selected direction to apply a force to a component, such as by pressing the coining device 22 into whatever is placed there beneath, such as the valve stem 36 and valve plug 38. There are a plurality of different press machines available that are suitable for use with the present invention, and all are well known in the art. The orientation of the valve stem 36 is such that the valve stem 36 is placed pointing axially downward with the valve plug 38 pointing in the opposite axial direction. The specific position of the valve stem 36 and valve plug 38 depends upon the configuration of the particular press 23, while concomitantly allowing access to the end of the valve stem 36 with the coining device 22, where a pre-defined cavity 39 is disposed to guide the coining device 22.

The coining device 22 is aligned with the end of the valve stem 36 and the cavity 39. The press 23 applies a load with the coining device onto the stem (step 54). An example load is approximately 5 tons in the case of a half-inch diameter valve stem 36. The press continues pressing the coining device 22 into the valve stem 36 and the cavity 39 until the coining device 22 travels a desired distance, deforming valve stem walls 40A and the valve plug 38 (step 56). Once the desired distance is achieved with the coining device 22, the press 23 withdraws the coining device 22 from the deformed valve stem 36 (step 58) with the features 40 formed.

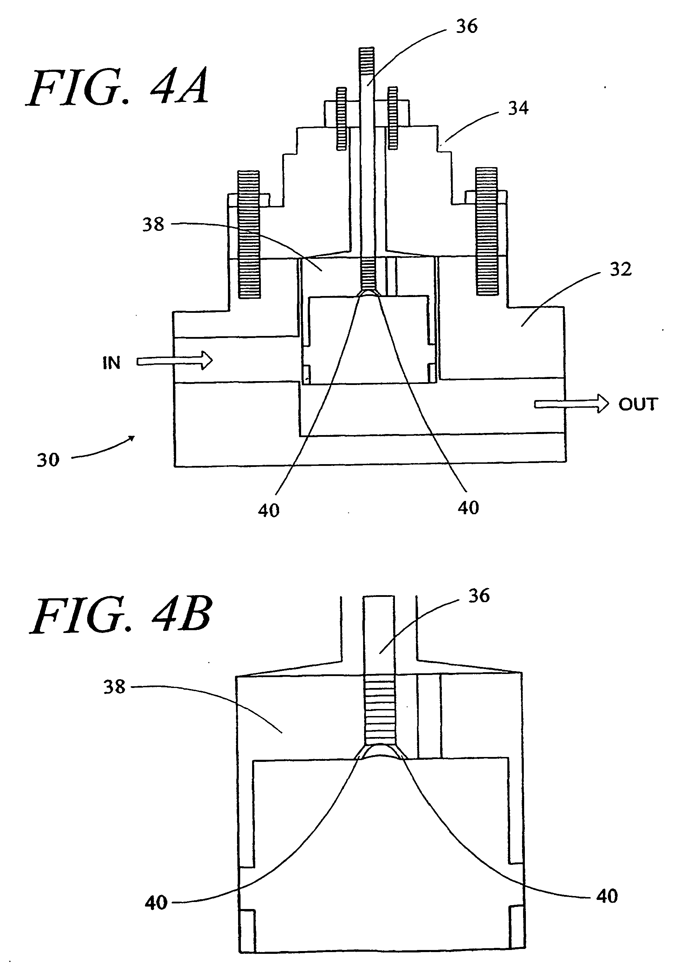

**FIGS. 4A** and **4B** illustrate a valve 30 resulting from the coining process for connecting and locking the valve stem 36 to the valve plug 38 in accordance with the teachings of the present invention. The valve 30 includes a valve body 32 coupled to a valve bonnet 34. The valve stem 36 is permanently secured, fixed, or coupled to the valve plug 38 by the radial features 40 formed by the coining process according to the method of the present invention. The term "permanent" as used herein is intended to mean a coupling or connection that does not yield to conventional forces experienced by the stem and component, and only breaks upon material failure of the components coupled together. The radial features 40 extend from an end of the valve stem 36 into the walls of the valve plug 38. The radial features 40 are formed by the lands 26 on the tip 28 of the coining device 22 during the pressing process. The radial features 40 can take a variety of different shapes and forms, which can vary with each formation. The features 40 are extensions formed from the deformation of the stem 36 material and/or indentations formed from the deformation of the surrounding walls of the valve plug 38. For example, the features 40 can be formed as flanges on one end of the valve stem 36 having corresponding indentations in the walls of the valve plug 38.

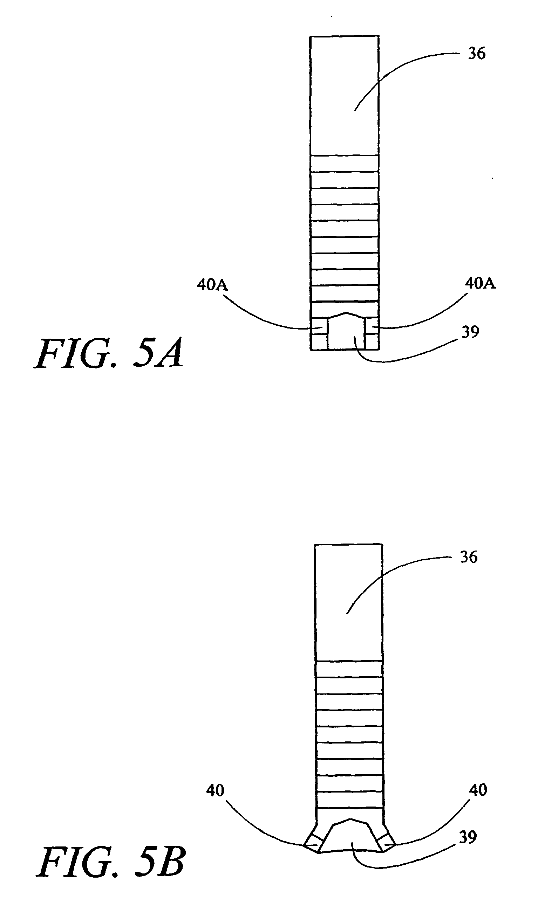

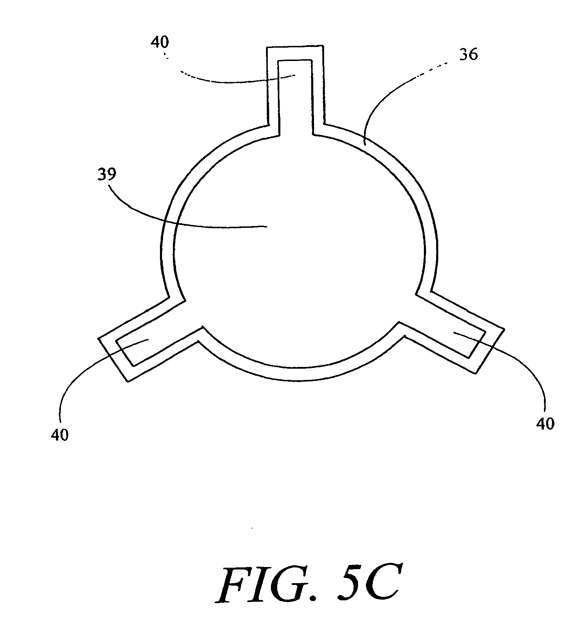

**FIGS. 5A** and **5B** are enlarged diagrammatic illustrations of the valve stem 36 at different points in the manufacturing process, for example, just prior to pressing with the coin device and just subsequent to the removal of the coin device from the valve stem 36. In **FIG. 5A,** the valve stem 36 is un-deformed, and maintains the cavity 39 at one end forming the valve stem walls 40A. The cavity 39 acts as a guide to the coining device 22 when in registration with the valve stem 36 to form the features 40. As illustrated in **FIG. 5B,** after the coining device 22 has been pressed into the cavity 39, the valve stem walls 40A have deformed to create the features 40. The walls of the passage 42 (see **FIG. 6B**) deform and indent to accommodate the features 40 of the deformed valve stem 36. **FIG. 5C** is an additional end view of the valve stem 36 after having been deformed by the coining device 22. The coining device utilized to form the valve stem 36 of this figure had three lands, at 120° angles to form three features 40. The cavity 39 inside the end of the valve stem 36 is maintained.

According to the teachings of the present invention, **FIGS. 6A** and **6B** illustrate the valve stem 36 and valve plug 38 combination. In this configuration, the valve stem 36 screws completely into the passage 42 of the valve plug 38 such that an end of the valve stem 36 is coextensive with an end of the passage 42 of the valve plug 38. The radial features 40 that result from the coining operation of the coining device 22, extend across a surface of the valve plug 38 and are slightly indented. The radial features 40, comprised of the wall 36A of the valve stem 36, penetrate into the wall of the passage 42 to hold the valve stem 36 permanently in place, thereby preventing rotation of the valve stem 36.

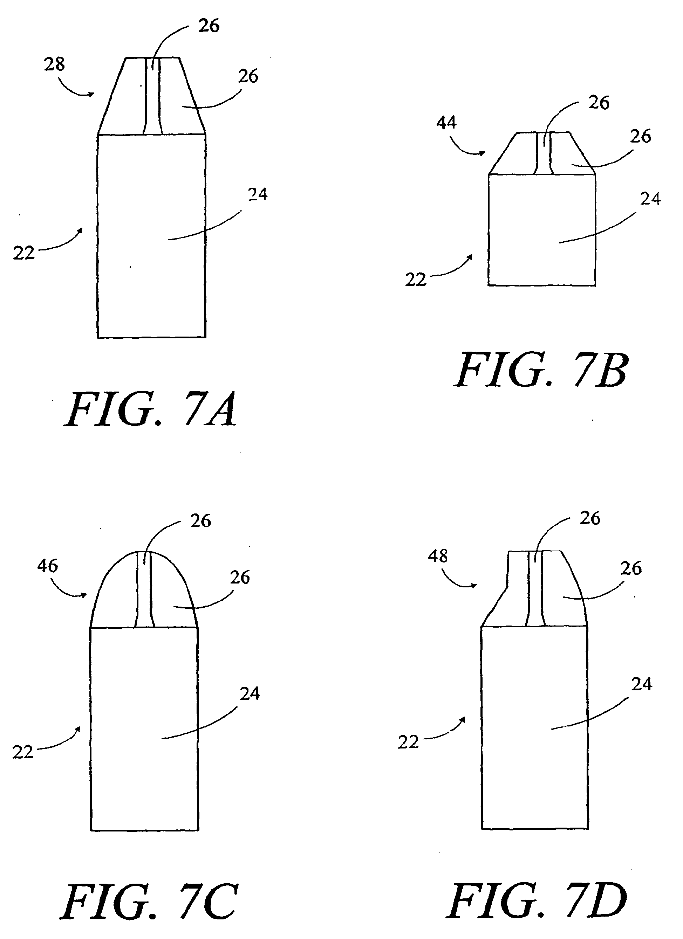

**FIGS. 7A** through **7D** illustrate several example embodiments of the coining device 22 in accordance with the present invention. The example embodiments illustrated are intended to show possible variations, but not all possible variations, of the coining device 22. One of ordinary skill in the art will understand that many other configurations can form the coining device 22 profile and layout. **FIG. 7A** illustrates the coining device 22 as described previously herein, with the tapered tip 28 and three lands 26. **FIG. 7B** depicts the coining device 22 having a shorter shank 24 in conjunction with a low profile tip 44 having three lands 26. The height of the low profile tip 44 is less than that of the tapered tip 28. **FIG. 7C** illustrates the coining device 22 having a rounded tip 46 disposed on the end of the shank 24. The rounded tip 46 also includes three lands 26. **FIG. 7D** illustrates the coining device 22 having a multi-profile tip 48 with three lands 26. The multi-profile tip 48 is also disposed at one end of the shank 24. In the multi-profile tip 48, each land 26 has a different profile. Although all of the illustrated embodiments show the coining device 22 having three lands 26, there can be any number of lands 26 positioned on the coining device 22, as long as there is sufficient space and the lands 26 are appropriate for forming the feature(s) 40.

The coining device 22 can be made of a number of different materials including a hardened metal. The coining device 22 is adapted to withstand the loads placed upon it during the coining process. In addition, the number and arrangement of the lands can vary depending on the desired number of radial features. Each land 26 corresponds to a radial feature 40 resulting in the valve stem 3 6.

The method and apparatus as described herein provides an efficient means for permanently and reliably mounting a stem, or stem-type component, to another component, such as a valve stem to a valve plug. Although the example of a valve stem and a valve plug are described herein, the process of installing the stem into a component can apply to a number of different arrangements. All that is required is some means of initially fastening the stem to the component, such as with the threaded passage, and access to the stem and the component in a manner allowing the coining the device to apply a load to the stem and deform the stem to create the radial features in the walls of the component. The method of the present invention is efficient and does not require complicated drilling procedures or exact alignments to attain a permanently mounted stem within a component. The efficiency of the process further reduces costs associated with mounting stems to components.

Numerous modifications and alternative embodiments of the present invention will be apparent to those skilled in the art in view of the foregoing description. Accordingly, this description is to be construed as illustrative only and is for the purpose of teaching those skilled in the art the best mode for carrying out the present invention. Details of the structure may vary substantially, and exclusive use of all modifications that come within the scope of the appended claims is reserved. It is intended that the present invention be limited only to the extent required by the appended claims.

## Claims

1. A method of connecting and locking a stem (36) to a valve plug (38), comprising the steps of:
disposing the stem (36) in a passage (42) formed in the valve plug (38);
**characterized by**
deforming an end portion of the stem (36) into a wall of the valve plug (38) to permanently non-rotatably lock the stem (36) within the passage (42) of the valve plug (38).

2. The method according to claim 1, wherein the passage (42) has an internal thread suitable for threadingly receiving the stem (36).

3. The method according to claim 1 or 2, wherein the step of deforming comprises pressing a coining device (22) into the passage (42) to engage with an end portion of the stem (36) to configure the stem (36) for permanent non-rotational mounting within the valve plug (38).

4. The method according to claim 3, wherein a cavity (39) is disposed in the end portion of the stem (36) for guiding the coining device (22).

5. The method according to any one of claims 3 and 4, wherein the coining device (22) further comprises a shank (24) having a tip (28) disposed at one end of the shank (24), wherein the tip (28) has a taper.

6. The method according to claim 5, wherein the tip (28) further comprises at least one land (26).

7. The method according to claim 6, wherein the at least one land (26) is substantially rectilinear in shape.

8. The method according to claim 6, wherein the at least one land (26) is non-uniform in shape.

9. The method according to claim 6, wherein the at least one land (26) is at least partially curved in shape.

10. The method according to any one of the preceding claims, further comprising the step of deforming the end portion of the stem (36) to form at least one radial feature (40) extending from an axis of the stem (36).

11. The method according to claim 10, further comprising the step of extending the at least one radial feature (40) into a wall of the valve plug (38) to substantially hinder rotation of the stem (36) relative to the valve plug (38).

12. The method according to claim 10, further comprising the step of extending three radial features (40) into a wall of the valve plug (38) to substantially hinder rotation of the stem (36) relative to the valve plug (38).

13. A valve, comprising:
a valve body (32);
a stem (36) mounted within the valve body (32); and
a valve plug (38) having a passage (42) sized for receiving a portion of the stem (36);
**characterized in that**
at least one radial feature (40) protrudes from an end of the stem (36) into a wall of the passage (42) to substantially hinder rotation of the stem (36) relative to the valve plug (38).

14. The valve according to claim 13, wherein the radial feature (40) non-rotatably mounts the stem (36) within the valve plug (38).

15. The valve according to claim 13 or 14, wherein three radial features (40) protrude from the end of the stem (36) into the wall of the passage (42) to substantially hinder rotation of the stem (36) relative to the valve plug (38).

## Patentansprüche

1. Verfahren zum Verbinden und Arretieren einer Spindel (36) an einem Ventilgehäuseverschluss (38), wobei das Verfahren die folgenden Schritte aufweist:
Anordnen der Spindel (36) in einem Kanal (42), der in dem Ventilgehäuseverschluss (38) gebildet ist;
**gekennzeichnet durch**
Verformen eines Endbereichs der Spindel (36) in eine Wand des Ventilgehäuseverschlusses (38), um die Spindel (36) in dem Kanal (42) des Ventilgehäuseverschlusses (38) permanent unverdrehbar zu arretieren.

2. Verfahren nach Anspruch 1, wobei der Kanal (42) ein Innengewinde hat, das zur einschraubbaren Aufnahme der Spindel (36) geeignet ist.

3. Verfahren nach Anspruch 1 oder 2, wobei der Schritt des Verformens den folgenden Schritt aufweist: Pressen einer Prägeeinrichtung (22) in den Kanal (42) zum Eingriff mit einem Endbereich der Spindel (36), um die Spindel (36) für die permanente unverdrehbare Anbringung in dem Ventilgehäuseverschluss (38) zu konfigurieren.

4. Verfahren nach Anspruch 3, wobei ein Hohlraum (39) in dem Endbereich der Spindel (36) zum Führen der Prägeeinrichtung (22) angeordnet ist.

5. Verfahren nach einem der Ansprüche 3 oder 4, wobei die Prägeeinrichtung (22) ferner einen Schaft (24) aufweist, der eine Spitze (28) hat, die an einem Ende des Schafts (24) angeordnet ist, wobei die Spitze (28) eine Verjüngung hat.

6. Verfahren nach Anspruch 5, wobei die Spitze (28) ferner mindestens einen Steg (26) aufweist.

7. Verfahren nach Anspruch 6, wobei der mindestens eine Steg (26) im wesentlichen geradlinige Gestalt hat.

8. Verfahren nach Anspruch 6, wobei der mindestens eine Steg (26) nicht gleichförmige Gestalt hat.

9. Verfahren nach Anspruch 6, wobei der mindestens eine Steg (26) mindestens teilweise gekrümmte Gestalt hat.

10. Verfahren nach einem der vorhergehenden Ansprüche, das ferner den folgenden Schritt aufweist: Verformen des Endbereichs der Spindel (36), um mindestens eine radiale Ausformung (40) zu bilden, die sich von einer Achse der Spindel (36) erstreckt.

11. Verfahren nach Anspruch 10, das ferner den folgenden Schritt aufweist:
Verlängern der mindestens einen radialen Ausformung (40) in eine Wand des Ventilgehäuseverschlusses (38), um eine Drehung der Spindel (36) relativ zu dem Ventilgehäuseverschluss (38) im wesentlichen zu verhindern.

12. Verfahren nach Anspruch 10, das ferner den folgenden Schritt aufweist:
Verlängern von drei radialen Ausformungen in eine Wand des Ventilgehäuseverschlusses (38), um eine Drehung der Spindel (36) relativ zu dem Ventilgehäuseverschluss (38) im wesentlichen zu verhindern.

13. Ventil, das folgendes aufweist:
einen Ventilkörper (32);
eine Spindel (36), die in dem Ventilkörper (32) angebracht ist; und
einen Ventilgehäuseverschluss (38), der einen Kanal (42) hat, der zur Aufnahme eines Bereichs der Spindel (36) bemessen ist;
**dadurch gekennzeichnet, dass**
mindestens eine radiale Ausformung (40) von einem Ende der Spindel (36) in eine Wand des Kanals (42) vorspringt, um eine Drehung der Spindel (36) relativ zu dem Ventilgehäuseverschluss (38) im wesentlichen zu verhindern.

14. Ventil nach Anspruch 13, wobei die radiale Ausformung (40) die Spindel in dem Ventilgehäuseverschluss (38) unverdrehbar anbringt.

15. Ventil nach Anspruch 13 oder 14, wobei drei radiale Ausformungen (40) von dem Ende der Spindel (36) in die Wand des Kanals (42) vorspringen, um eine Drehung der Spindel (36) relativ zu dem Ventilgehäuseverschluss (38) im wesentlichen zu verhindern.

## Revendications

1. Procédé de raccordement et de blocage d'une tige (36) sur un clapet de soupape (38), comprenant les étapes suivantes :
disposer la tige (36) dans un passage (42) formé dans le clapet de soupape (38);
**caractérisé par**
la déformation d'une partie d'extrémité de la tige (36) dans une paroi du clapet de soupape (38) afin de bloquer la tige (36) de façon permanente, de manière à ne pas tourner, à l'intérieur du passage (42) du clapet de soupape (38).

2. Procédé selon la revendication 1, dans lequel le passage (42) a un filetage interne qui convient pour recevoir, par filetage, la tige (36).

3. Procédé selon la revendication 1 ou 2, dans lequel l'étape de déformation comprend le pressage d'un dispositif de matriçage (22) dans le passage (42) pour qu'il s'engage sur une partie d'extrémité de la tige (36) afin de configurer la tige (36) pour un montage permanent de manière à ne pas tourner, à l'intérieur du clapet de soupape (38).

4. Procédé selon la revendication 3, dans lequel une cavité (39) est disposée dans la partie d'extrémité de la tige (36) afin de guider le dispositif de matriçage (22).

5. Procédé selon l'une quelconque des revendications 3 et 4, dans lequel le dispositif de matriçage (22) comprend en outre une queue (24) ayant une pointe (28) disposée au niveau d'une extrémité de la queue (24), dans laquelle la pointe (28) a une conicité.

6. Procédé selon la revendication 5, dans lequel la pointe (28) comprend en outre au moins une partie plate (26).

7. Procédé selon la revendication 6, dans lequel la au moins une partie plate (26) est de forme sensiblement rectiligne.

8. Procédé selon la revendication 6, dans lequel la au moins une partie plate (26) n'a pas une forme uniforme.

9. Procédé selon la revendication 6, dans lequel la au moins une partie plate (26) a une forme au moins partiellement incurvée.

10. Procédé selon l'une quelconque des revendications précédentes, comprenant en outre l'étape de déformation de la partie d'extrémité de la tige (36) afin de former au moins un élément radial (40) qui s'étend à partir d'un axe de la tige (36).

11. Procédé selon la revendication 10, comprenant en outre l'étape d'extension du au moins un élément radial (40) dans une paroi du clapet de soupape (38) afin d'empêcher sensiblement toute rotation de la tige (36) par rapport au clapet de soupape (38).

12. Procédé selon la revendication 10, comprenant en outre l'étape d'extension de trois éléments radiaux (40) dans une paroi du clapet de soupape (38) afin d'empêcher sensiblement toute rotation de la tige (36) par rapport au clapet de soupape (38).

13. Soupape comprenant :
un corps de soupape (32) ;
une tige (36) montée à l'intérieur du corps de soupape (32) ; et
un clapet de soupape (38) ayant un passage (42) dimensionné pour recevoir une portion de la tige (36) ;
**caractérisé en ce que** :
au moins un élément radial (40) fait saillie à partir d'une extrémité de la tige (36) dans une paroi du passage (42) afin d'empêcher sensiblement la rotation de la tige (36) par rapport au clapet de soupape (38).

14. Soupape selon la revendication 13, dans laquelle l'élément radial (40) permet le montage de manière à ne pas tourner de tige (36) à l'intérieur du clapet de soupape (38).

15. Procédé selon la revendication 13 ou 14, dans laquelle trois éléments radiaux (40) font saillie à partir de l'extrémité de la tige (36) dans la paroi du passage (42) afin d'empêcher sensiblement toute rotation de la tige (36) par rapport au clapet de soupape (38).
